**Europäisches Patentamt**

**European Patent Office**

**Office européen des brevets**

(19)

(11) Veröffentlichungsnummer: **0 209 111**
**B1**

(12) # EUROPÄISCHE PATENTSCHRIFT

(45) Veröffentlichungstag der Patentschrift:
**17.05.89**

(51) Int. Cl.⁴: **B25J 9/00**, B25J 17/00

(21) Anmeldenummer: **86109666.7**

(22) Anmeldetag: **15.07.86**

(54) **Getriebekopf für Manipulatoren.**

(30) Priorität: **19.07.85 DE 3525806**

(43) Veröffentlichungstag der Anmeldung:
**21.01.87 Patentblatt 87/4**

(45) Bekanntmachung des Hinweises auf die Patenterteilung:
**17.05.89 Patentblatt 89/20**

(84) Benannte Vertragsstaaten:
**AT BE CH DE FR GB IT LI NL SE**

(56) Entgegenhaltungen:
**DE-C- 837 629**

(73) Patentinhaber: **KUKA Schweissanlagen & Roboter GmbH, Blücherstrasse 144, D-8900 Augsburg(DE)**

(72) Erfinder: **Zimmer, Ernst, Michael-Steinherr Strasse 34, D-8904 Friedberg(DE)**

(74) Vertreter: **Ernicke, Hans-Dieter, Dipl.-Ing. et al, Schwibbogenplatz 2b, D-8900 Augsburg(DE)**

## Beschreibung

Die Erfindung befaßt sich mit einem Getriebekopf für Manipulatoren mit den im Oberbegriff des Anspruches (1) angegebenen Merkmalen.

Durch die DE-B 2 745 932 ist es bekannt, einen Getriebekopf für einen Manipulator mit zwei hintereinander angeordneten Kopfteilen auszuführen, wobei die beiden Kopfteile entlang einer schrägen Ebene aneinander drehbar gelagert sind. Der Werkzeugträger ist am vorderen Kopfteil längs einer zur Antriebsachse koaxialen Achse drehbar angeordnet.

Diese Grundstellung in der gestreckten Lage des Getriebekopfes bringt Schwierigkeiten bei der rechnerisch gesteuerten Bewegung des Manipulators. Eine vom Programm vorgegebene Verdrehung des Werkzeuges um seine eigene Drehachse (6. Achse) läßt in der Durchführung der rechnerischen Vorgabe nämlich offen, ob der Getriebekopf um die Achse der konzentrischen Antriebswellen (4. Achse) oder ob der vordere Kopfteil für sich allein um diese Achse gedreht werden soll. Diese Zweideutigkeit wirkt sich insbesondere bei Bahnsteuerung (CP=continuous path) negativ aus und konnte bisher nur durch programm- bzw. steuerungstechnische Manipulationen, allerdings nur unbefriedigend überwunden werden.

Bei PTP-Steuerung (Punkt-zu-Punkt-Steuerung) ist die koaxiale Anordnung der Drehachse des Werkzeugträgers (6. Achse) zu den konzentrischen Antriebswellen jedoch unproblematisch.

In der DE-A 3 428 748 wird ein aus drei hintereinander angeordneten Kopfteilen bestehender Getriebekopf für einen Manipulator beschrieben, dessen mittlerer Kopfteil zwei schräge Drehachsen aufweist, die in der Streckstellung des Getriebekopfes jeweils einen in entgegengesetzter Richtung sich öffnenden spitzen Winkel mit der Längsachse des Getriebekopfes bilden. Am Ende des einzelnen zu den Kopfteilen führenden Getriebezuges ist jeweils ein hochuntersetzendes Getriebe angeordnet.

Mit einer solchen Gestaltung erlangt der Getriebekopf einen wesentlich vergrößerten Bewegungsspielraum bei kompakter Bauweise des Getriebekopfes, denn zufolge der schrägen Verdrehbarkeit des vorderen Kopfteils gegenüber dem mittleren wird ein wesentlich vergrößerter Wirkbereich des Werkzeuges erreicht. Da in diesem bekannten Fall die Abtriebswelle nicht koaxial zur Antriebswelle liegt, werden Zweideutigkeiten in der rechnerischen Steuerung vermieden.

Mit der Erfindung wird die Aufgabe gestellt, den Aktionsbereich und die Anwendungsmöglichkeit des Getriebekopfes noch zu erweitern und insbesondere die Rotation des Werkzeugträgers innerhalb des vorderen Getriebekopfteiles zu ermöglichen, ohne den hinteren Kopfteil um seine Achse drehen zu müssen.

Diese Aufgabe wird, ausgehend von der DE-A 3 428 748, mit den kennzeichnenden Merkmalen des Hauptanspruches gelöst.

Die Erfindung umfaßt den Grundgedanken, mit drei konzentrisch zueinander angeordneten Antriebswellen vier verschiedene Drehbewegungen am erfindungsgemäßen Getriebekopf ausführen zu können, nämlich das Drehen des hinteren Kopfteiles um die Achse der Antriebswellen, das Drehen des mittleren Kopfteiles um die erste schräge Achse gegenüber dem hinteren Kopfteil, das Drehen des vorderen Kopfteiles um die zweite schräge Achse gegenüber dem mittleren Kopfteil und das Drehen des Werkstückträgers innerhalb des vorderen Kopfteiles. Hierzu lehrt die Erfindung, längs der beiden schrägen Achsen sich erstreckende Hohlwellen durch Kegelradsätze miteinander zu verbinden und von einem einzigen Antriebsmotor aus anzutreiben. Da diese Hohlwellen über Untersetzungsgetriebe am vorderen bzw. mittleren Kopfteil abgestützt sind, wobei die Getriebe gleichgroße Untersetzung besitzen, und da die Kopfteile aneinandergelagert sind, führt die Rotation der Hohlwellen zu einer gleichzeitigen, aber gegensinnigen Drehbewegung des vorderen und mittleren Kopfteiles um die schrägen Achsen. Zufolge dieser Hohlwellen-Konstruktion ist nun die Möglichkeit geschaffen, einen Getriebezug von einer innenliegenden Antriebswelle durch die Hohlwellen bis zu einer im vorderen Kopfteil gelagerten, treibenden Welle zu führen, die mit dem Werkzeugträger verbunden ist.

Durch die DE-A 3 431 033 ist es bei einem drei Kopfteile aufweisenden Getriebekopf zwar ebenfalls bekannt, eine mit dem Werkzeugträger verbundene Welle koaxial zur Antriebswelle (bei gestreckter Getriebekopfstellung) zu lagern und anzutreiben, wozu hohle Wellen und Kegelräder verwendet werden, um durch den Innenraum Kabel, Schläuche, Leitungen oder dgl. zu führen. Bei dieser Anordnung wird der vordere Kopfteil nicht unmittelbar angetrieben, sondern über einen schrägen Kegelradzahnkranz mit einem am hinteren Kopfteil befindlichen Zahnkranz gekoppelt, wobei der punktuelle Zahneingriff außerhalb des mittleren Kopfteiles liegt. Wenn also der mittlere Kopfteil verdreht wird, ist der vordere Kopfteil zufolge seiner Lagerung am mittleren Kopfteil bestrebt, dieser Drehung zu folgen. Da aber der punktuelle Zahneingriff mit dem hinteren Kopfteil vorliegt, erfolgt am Zahnkranz des unbeweglich gehaltenen hinteren Kopfteiles eine Abwälzbewegung des vorderen Kopfteiles, was zu einer Taumelbewegung des vorderen Kopfteiles führt. Wenn hingegen der hintere Kopfteil verdreht wird, führt zugleich der vordere Kopfteil eine unerwünschte Eigendrehbewegung mit angenähert gleichgroßem Drehwinkel aus. Die Eigendrehbewegung ist die Folge von Relativdrehbewegungen der ineinander gelagerten und sich deshalb beeinflußenden Getriebeteile. Außerdem entsteht ein erheblicher negativer Einfluß der Verzahnungsfehler und des Verzahnungsspiels auf die räumliche Zuordnung der Kopfteile dadurch, daß beim vorbekannten Getriebekopf hochuntersetzende Getriebe abtriebsseitig nicht vorgesehen sind, die eine Reduzierung der Fehler, und der Wirkung der Relativdrehbewegungen bewirken könnten.

Bei der Erfindung wird hingegen eine wesentliche Verbesserung dadurch erreicht, daß innenliegende, ölbadgeschmierte Verzahnungen und Abstützungen durch abtriebsseitige hochuntersetzende Untersetzungsgetriebe verwendet werden, was zu einer sehr kompakten Bauweise mit höherer und über lange Zeit konstanter Genauigkeit der Bewegungen führt. Relativdrehbewegungen sind nur noch im Untersetzungsverhältnis wirksam und durch die Steuerung zu kompensieren.

Mit der Erfindung wurde außerdem erkannt, daß die mit der Lehre der DE-A 3 428 748 offenbarte Beseitigung der rechnerischen Zweideutigkeit nicht die einzig mögliche ist und zwar insbesondere dann, wenn der Werkzeugträger bzw. die Flanschplatte im vorderen Kopfteil drehbar gelagert und angetrieben ist. Die in den Unteransprüchen (5) bis (10) angegebenen Merkmale zeigen noch weitere Möglichkeiten zur Beseitigung rechnerischer Zweideutigkeiten.

Einzelheiten der Erfindung sind in der Zeichnung schematisch und beispielsweise dargestellt. Es zeigen:

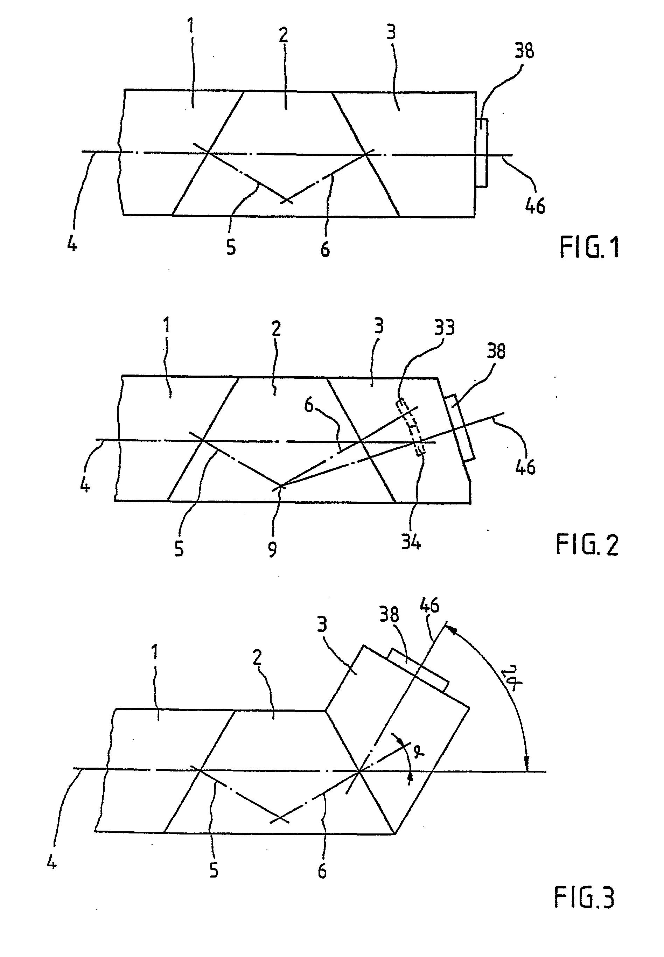

Fig. 1: eine symbolische Seitenansicht eines Getriebekopfes in seiner gestreckten Lage,

Fig. 2: eine Seitenansicht gemäß Fig. 1 mit schräg angeordnetem Abtrieb,

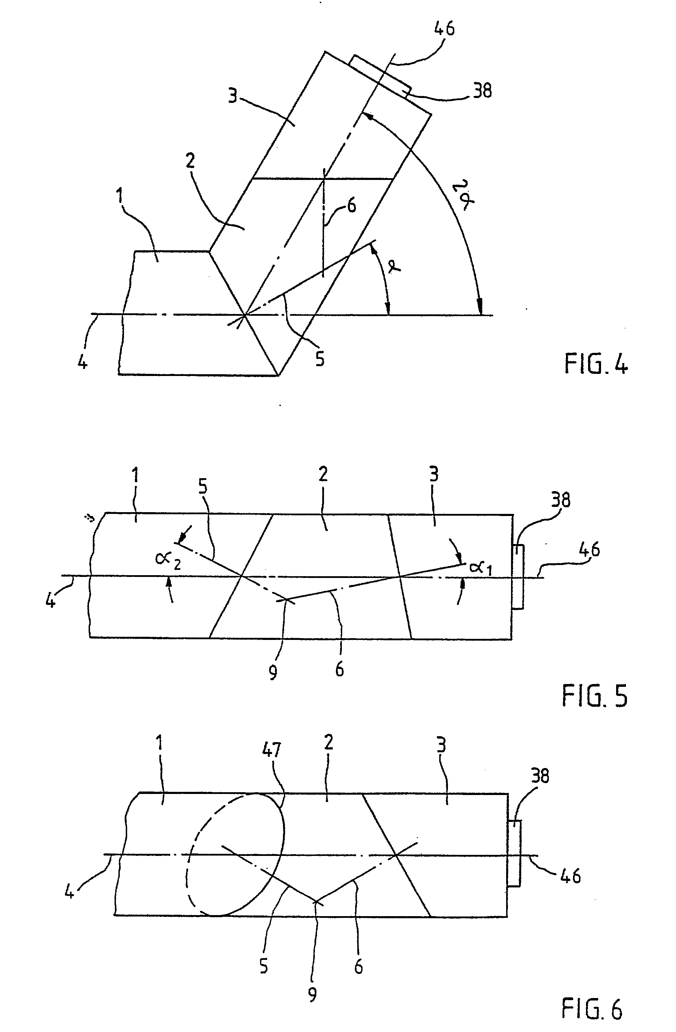

Fig. 3 und 4: Seitenansichten des Getriebekopfes in übereinstimmenden Schwenkstellungen,

Fig. 5 bis 11: Ansichten verschiedener Getriebeköpfe mit in besonderer Weise angeordneten, schrägen Achsen und

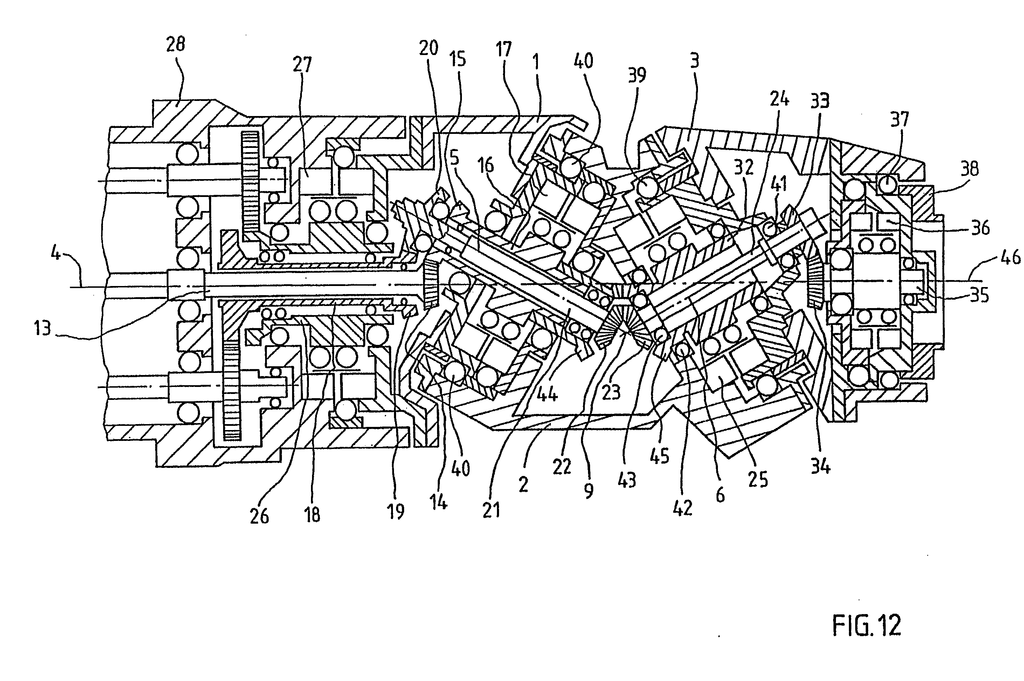

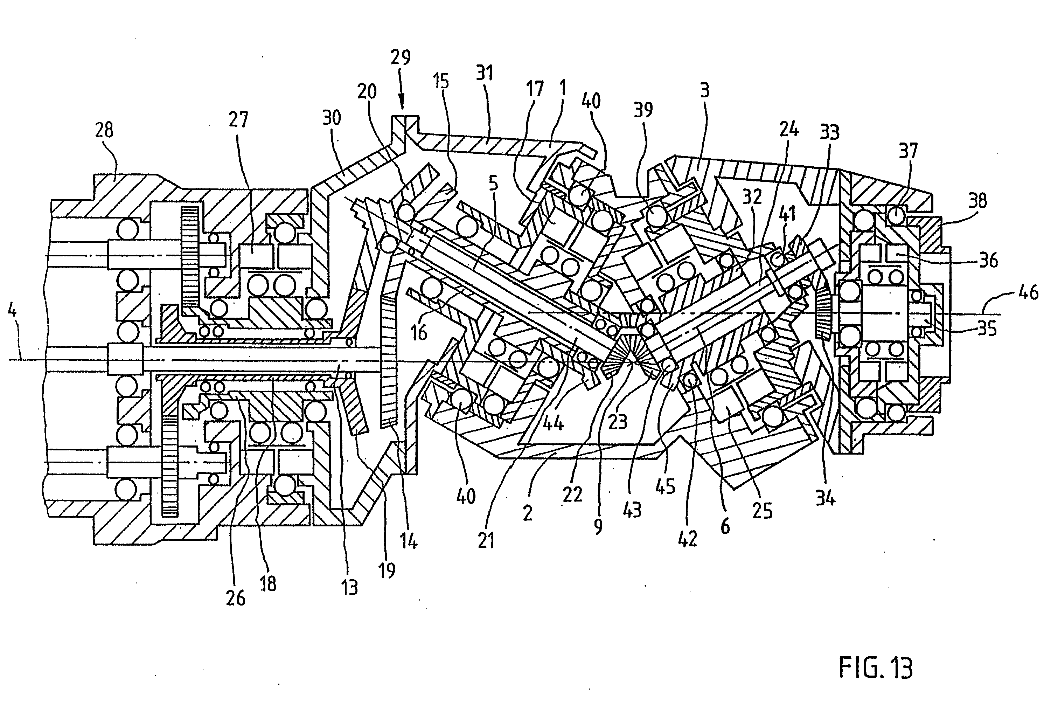

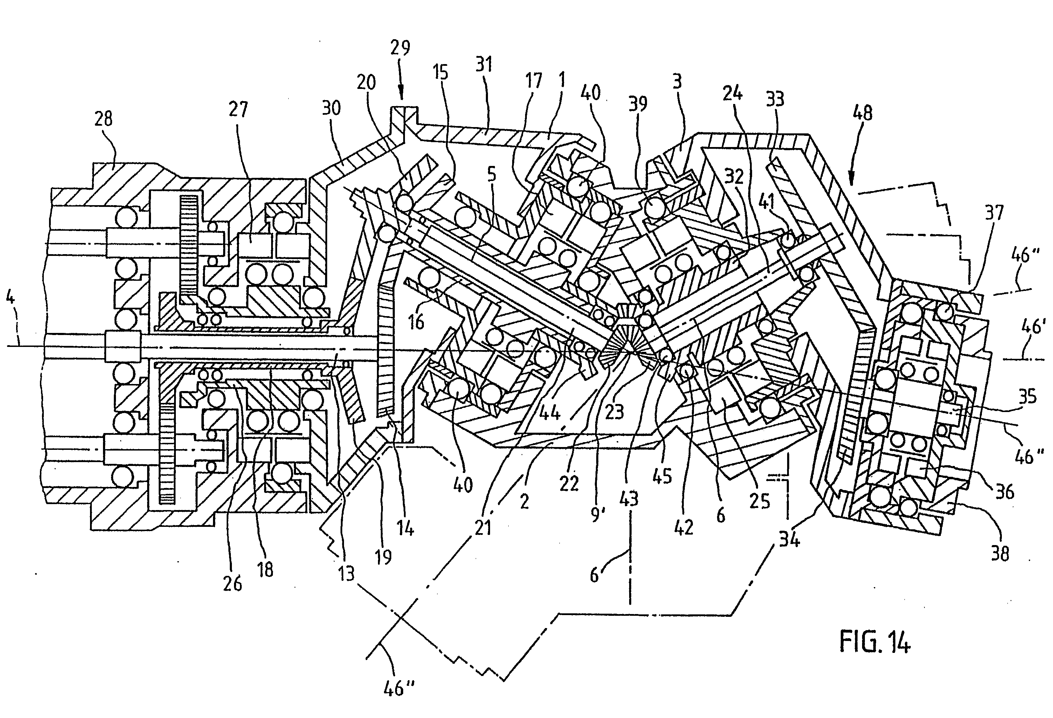

Fig. 12 bis 14: Längsschnitte durch drei konstruktive Ausführungsbeispiele.

Die Fig. (1) entspricht der Fig. (1) der DE-OS 3 428 748 und soll verdeutlichen, daß eine Zweideutigkeit für die rechnerische Steuerung vorhanden ist, wenn im vorderen Getriebekopfteil (3) ein Werkzeugträger bzw. eine Flanschplatte (38) um eine koaxial zur Antriebsachse (4) liegende Abtriebsachse (46) drehbar gelagert und angetrieben ist. Dann würde nämlich die Verdrehung des Werkzeugträgers um die Abtriebsachse (46) auch durch Verdrehung des hinteren Getriebekopfteiles (1) um die Antriebsachse (4) möglich sein. Diese Zweideutigkeit würde sich in diesem Fall nur dann vermeiden lassen, wenn der hintere Getriebekopfteil (1) um die Achse (4) unverdrehbar angeordnet wäre.

Mit (5) und (6) sind schräge Schwenkachsen bezeichnet, um welche die Relativdrehbewegung des mittleren Getriebekopfteiles (2) gegenüber dem hinteren bzw. vorderen Getriebekopfteil (1, 3) stattfindet.

Fig. (2) zeigt eine Möglichkeit der Vermeidung einer solchen Zweideutigkeit auf, indem die Abtriebsachse (46) im spitzen Winkel schräg zur Antriebsachse (4) angeordnet ist. Vorzugsweise soll die Abtriebsachse (46) den Schnittpunkt (9) der beiden schrägen Achsen (5, 6) schneiden, um die Rechnung der Bewegungsvorgänge zu erleichtern. Mit (33) und (34) sind schematisch Kegelräder zum Antrieb der Flanschplatte (38) dargestellt. Soll eine Drehbewegung des Werkzeugträgers (38) um die Achse (46) stattfinden, ist damit klargestellt, daß hierfür nicht der Antrieb des hinteren Getriebekopfteiles (1) zuständig ist. Zweideutigkeit ist also vermieden.

Die Fig. (3) und (4) entsprechen den Fig. (2) und (4) der DE-OS 3 428 748. Man erkennt, daß in beiden Fällen der vordere Kopfteil (3) um den Winkel (2α) gegenüber der Antriebsachse (4) geschwenkt ist, wobei unterschiedliche Drehantriebe verwendet werden. Im ersten Fall wird der vordere Kopfteil (3) um 180° gegenüber dem feststehenden, mittleren Kopfteil (2) gedreht. Im zweiten Fall wird der mittlere Kopfteil (2) mit dem ihm gegenüber in gleicher Lage verbleibenden, vorderen Kopfteil (3) um 180° gegenüber dem hinteren Kopfteil (1) verdreht. Die dadurch gegebene Zweideutigkeit läßt sich mit einer der Varianten nach Fig. (5) bis (11) beseitigen.

Beim Beispiel der Fig. (5) sind die Winkel (α1) und (α2) der beiden schrägen Achsen (5) und (6) ungleich groß, weshalb ihr Schnittpunkt (9) aus der Symmetriestellung der Fig. (1) seitlich versetzt zu liegen kommt. Die gleichen Verdrehungen der Kopfteile (2) und (3) führen somit zu voneinander unterschiedlichen Winkelstellungen.

In Fig. (6) ist gezeigt, daß die schräge Achse (5) in der Weise aus der Zeichenblattebene schräg herausgestellt ist, daß der Schnittpunkt (9) der beiden schrägen Achsen (5) und (6) in der Zeichenblattebene verbleibt. Durch die Ellipse (47) ist die schräge Rotationsebene symbolisiert, entlang welcher die beiden Kopfteile (1,2) aneinandergeführt sind.

Die Fig. (7) erweitert diesen Gedanken, indem beide schräge Achsen (5,6) aus der Zeichenblattebene schräg herausgestellt sind. Sämtliche Beispiele der Fig. (5) bis (7) zeigen Möglichkeiten zur Vermeidung der in Fig. (3) und (4) angegebenen Zweideutigkeiten auf. Im Fall der Fig (7) kann der Schnittpunkt (9) der schrägen Achsen (5,6) abseits der Achse (4), oder aber auch in der Zeichenblattebene liegen.

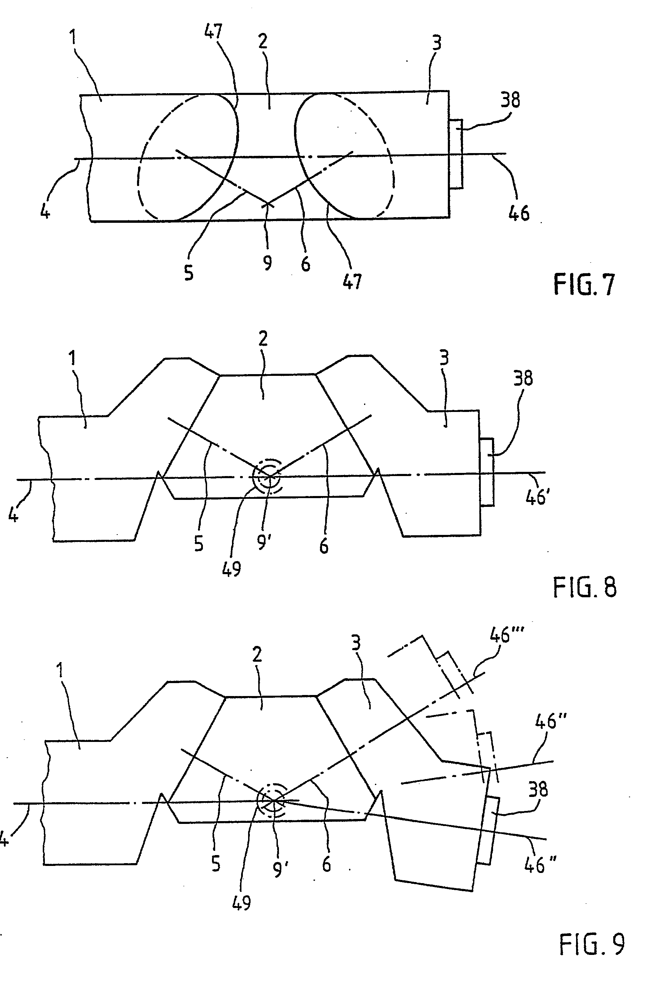

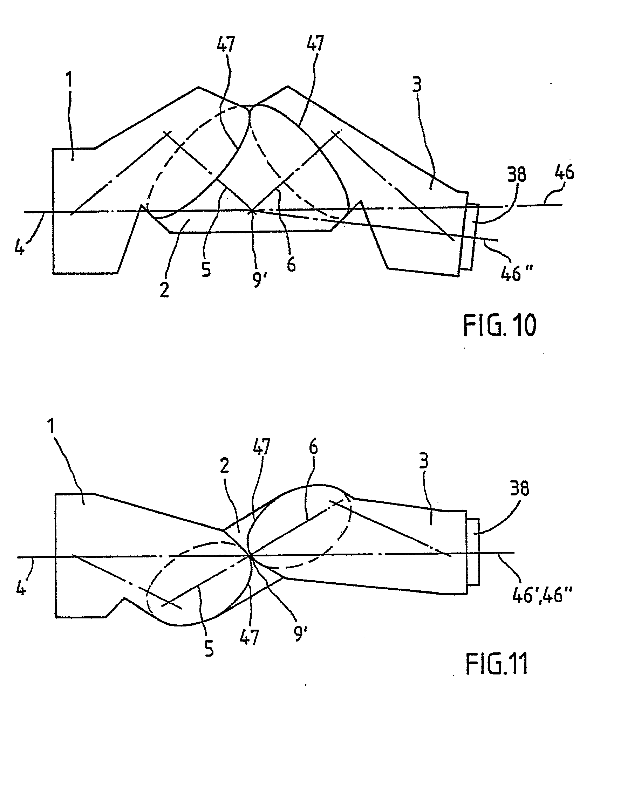

Eine bedeutsame Erleichterung der Berechnung automatischer Bewegungssteuerungen ergibt sich dann, wenn der Schnittpunkt (9') der schrägen Achsen (5,6) auf der Achse (4) liegt und wenn die Abtriebsachse (46', 46", 46''') diesen Schnittpunkt (9') schneidet. Zur Verdeutlichung der Offenbarung sei angeführt, daß in den hierfür angegebenen Beispielen der Fig. (8) bis (11) die Abtriebsachse (46) die Bezeichnung (46') erhält, wenn sie koaxial zur Antriebsachse (4) liegt und den Punkt (9') schneidet (Fig. 8 und 10). Sie erhält die Bezeichnung (46"), wenn sie einen Winkel mit der Antriebsachse (4) bildet, aber auch den Punkt (9') schneidet (Fig. 9 und 10).

Die Gestaltung nach Fig. (8) entwickelt sich aus der Anordnung nach Fig (1) dadurch, daß die schrägen Wellen (5,6) in dem vorderen und hinteren Getriebekopfteil (1,3) soweit seitlich versetzt gelagert sind, bis ihre Achsen sich in der Antriebsachse (4) schneiden.

Im Beispiel der Fig. (9) ist zusätzlich die schräge Lage der Abtriebsachse (46") zur Antriebsachse (4) gezeigt, was – wie gesagt – die Zweideutigkeit der Ansteuerung dieser Achsen beseitigt. Die Achse (46") kann auch zur Deckung mit Achse (6) gebracht und als Achse (46''') bezeichnet werden, was einerseits einer Reduzierung der getrieblichen Übertragungselemente und damit des baulichen Aufwandes und andererseits einer Verkleinerung des Bewegungsspielraumes gleichkommt aber für viele Einsatzfälle ausreichend ist.

Eine schädliche, rechnerische Zweideutigkeit entsteht durch die Koaxialität der Achsen (6) und (46''') nicht, weil bei gleichzeitiger getrieblicher Kopplung der Achsen (5) und (6) letztere als Einzelachse keine Funktion hat.

Die Fig. (8) und (9) gehen davon aus, daß die Achsen (4, 5, 6, 46, 46'', 46''') in der Streckstellung des Getriebekopfes in der Zeichenblattebene liegen. Im Falle der Fig. (8) wäre die zu Fig. (3) und (4) festgestellte Zweideutigkeit noch nicht beseitigt. Wie man aber aus Fig. (6) und (7) weiß, läßt sich diese Zweideutigkeit durch schräg aus der Zeichenblattebene herausgestellte Achsen (5, 6) beseitigen. Diese Maßnahme im Zusammenhang mit der koaxialen Lage des Schnittpunktes (9') der Achsen (4, 5, 6, 46', 46'', 46''') führt zu den Ausführungsbeispielen der Fig. (10) und (11). Die Fig. (10) und (11) zeigen eine Variante zu Fig. (7) in Seitenansicht und Draufsicht, wobei die einzelnen Kopfteile (1, 2) und (3) seitlich auskragende Gehäuseteile zur Lagerung der schrägen, aus der Zeichenblattebene nach hinten und vorne herausragenden Achsen (5, 6) aufweisen und der Schnittpunkt (9') dieser schrägen Achsen (5, 6) in der Zeichenblattebene liegt und gemeinsamer Endpunkt der Achsen (4) und (46', 46'') ist. Außerdem ist die Abtriebsachse (46'') schräg angeordnet, was zur Folge hat, daß sie nicht fluchtend zur Antriebsachse (4) in der Zeichenblattebene liegt und somit rechnerische Zweideutigkeiten nicht entstehen.

Der in den Fig. (8) bis (11) gezeigte Schnittpunkt (9') der Achsen (4, 5, 6, 46', 46'', 46''') kann erfindungsgemäß der Mittelpunkt eines Kugel- oder Kardangelenkes (49) sein, über welches die Antriebsachse (4) mit der Abtriebsachse (46', 46'', 46''') räumlich beweglich verbunden ist. Dieses Kugel oder Kardangelenk (49) ist symbolisch dargestellt. Es läßt mehrere konstruktive Gestaltungen zu.

In den Fig. (12) bis (14) sind konstruktive Ausführungsbeispiele für den Antrieb der Flanschplatte (38), ausgehend von Fig. (1) gezeigt, wobei in Fig. (12) die Abtriebsachse (46) koaxial und in Fig. (13) parallel zur Antriebsachse (4) angeordnet ist. Fig. (14) ist das konstruktive Ausführungsbeispiel der Fig. (8 und 9). Der Schnittpunkt (9') der Achsen (5, 6) ist gemeinsamer Endpunkt der Achsen (4) und (46', 46'', 46'''). Die schräge Anordnung der in der Abtriebsachse (46'', 46''') liegenden, treibenden Welle (35) ist hauptsächlich bei sogenannten bahngesteuerten Manipulatoren vorteilhaft, um rechnerische Zweideutigkeiten zu vermeiden. Im konstruktiven Ausführungsbeispiel ist eine innere Antriebswelle (13) über die Kegelräder (14, 15) mit einer Hohlwelle (16) verbunden, welche über ein Untersetzungsgetriebe (17) mit dem mittleren Kopfteil (2) drehschlüssig verbunden ist. Dieser mittlere Kopfteil (2) wird über diese Kegelradanordnung (14, 15) um die Schwenkachse (5) gedreht. Er ist über geeignete Lagerungen (40) am hinteren Kopfteil (1) um eine zur Schwenkachse (5) senkrechte Ebene geführt.

Die äußere Antriebswelle (26) wirkt über das Untersetzungsgetriebe (27) direkt auf den hinteren Kopfteil (1) ein, der koaxial zum Auslegerarm (28) angeordnet und an diesem drehbar gelagert ist. Sämtliche Untersetzungsgetriebe (17, 25, 27, 36) sind abtriebsseitig angeordnet, was eine weitgehend spielfreie, räumlich kompakte und damit kleinbauende Getriebekopfkonstruktion zur Folge hat. Diese Untersetzungsgetriebe (17, 25, 27, 36) sind für hohe Untersetzungen vorgesehen.

Längs der zweiten, schrägen Schwenkachse (6) ist eine Hohlwelle (32) angeordnet, die mit der ihr vorausgehenden Hohlwelle (16) über Kegelräder (44, 45) verbunden ist. Die Hohlwelle (16) treibt über das hochuntersetzende Getriebe (17), das sich am hinteren Kopfteil (1) abstützt, den mittleren Kopfteil (2) um die schräge Schwenkachse (5) an. Die andere Hohlwelle (32) stützt sich mit dem hochuntersetzenden Getriebe (25) am mittleren Kopfteil (2) ab und treibt den vorderen Kopfteil (3) um die zweite, schräge Schwenkachse (6) an. Beide Untersetzungen der Betriebe (17, 25) sind gleich groß und werden bevorzugt spiegelbildlich zueinander eingebaut, was zur Folge hat, daß die aneinandergelagerten Kopfteile (2, 3) bei Rotation der Hohlwellen (16, 32) eine gleichzeitige, aber gegensinnige Drehbewegung ausführen.

Auf diese Weise ist es möglich, durch die Hohlwellen (16, 32) einen Antriebszug zu führen, der von der mittleren Antriebswelle (18) ausgeht und über die innenliegenden Zwischenwellen (21, 24) und die Kegelradpaare (22, 23) und (33, 34) auf eine treibende Welle (35) wirkt, die über ein hochuntersetzendes Getriebe (36) am vorderen Kopfteil (3) abgestützt ist. Dadurch wird eine Flanschplatte (38) angetrieben, die über das Lager (37) am vorderen Kopfteil (3) geführt ist und den Werkzeugträger aufnimmt.

Der vordere Kopfteil (3) ist über das Lager (39) am mittleren Kopfteil (2), dieser über das Lager (40) am hinteren Kopfteil (1) drehbar geführt. Die Zwischenwelle (24) ist abtriebsseitig über das Lager (41) am vorderen Kopfteil (3) und antriebsseitig über das Lager (43) an der Hohlwelle (32) geführt, die ihrerseits über das Lager (42) am mittleren Kopfteil (2) gelagert ist.

In der Zeichnung der Fig. (12) ist der Schnittpunkt (9) der schrägen Achsen abseits der Antriebsachse (4) vorgesehen. Man kann diesen Schnittpunkt (9) aber auch in die Antriebsachse (4) legen, wie dies in Fig. (13) dargestellt ist. Dann wird beim Ausführungsbeispiel ein Versatz des Zwischenteiles (29) mit Hilfe der Flanschteile (30, 31) herbeigeführt.

Die Folge hiervon ist das seitliche Versetzen der treibenden Welle (35) parallel zur Antriebsachse (4). Will man dies beispielsweise für Punkt-zu-Punktsteuerungen vermeiden, so kann man im vorderen Kopfteil einen Rückversatz (48) für die Lagerung der treibenden Welle (35) vorsehen, der den seitlichen Versatz aufhebt und somit sicherstellt, daß die treibende Welle (35) bei Streckstellung des Getriebekopfes (1, 2, 3) koaxial zur Antriebsachse (4) liegt. Die Fig. (14) zeigt ein konstruktives Ausführungsbeispiel für bahngesteuerte Manipulatoren zur Verhinderung rechnerischer Zweideutigkeit, bei dem die schräge Lage der Abtriebsachse (46'') zu bevorzugen ist. Die Abtriebsachse (46') – Fig. (14) – ergibt sich aus dem Rückversatz (48) der treibenden Welle (35) nach Fig. (13).

Die Schrägstellung der Abtriebsachse (46") zur Antriebsachse (4) kann nicht nur – wie in Fig. (14) gezeichnet – nach unten, sondern auch – wie strichpunktiert angedeutet – nach oben gerichtet sein, Selbst eine räumliche Schrägstellung, z.B. in die Zeichenblattebene hinein oder aus ihr heraus, ist ausführbar und würde zur Lösung der gestellten Aufgabe verwendbar sein.

Stückliste

(1) hinterer Kopfteil
(2) mittlerer Kopfteil
(3) vorderer Kopfteil
(4) Achse der Antriebswellen
(5) schräge Schwenkachse
(6) schräge Schwenkachse
(7) ---
(8) ---
(9) Schnittpunkt
(9') Schnittpunkt
(10) ---
(11) ---
(12) ---
(13) innere Antriebswelle
(14) Kegelrad
(15) Kegelrad
(16) Hohlwelle
(17) Untersetzungsgetriebe
(18) mittlere Antriebswelle
(19) Kegelrad
(20) Kegelrad
(21) Zwischenwelle, Getriebezug
(22) Kegelrad
(23) Kegelrad
(24) Zwischenwelle, Getriebezug
(25) Untersetzungsgetriebe
(26) äußere Antriebswelle
(27) Untersetzungsgetriebe
(28) Auslegerarm
(29) Zwischenteil
(30) Flanschteil
(31) Flanschteil
(32) Hohlwelle
(33) Kegelrad
(34) Kegelrad
(35) treibende Welle
(36) Untersetzungsgetriebe
(37) Lager
(38) Flanschplatte
(39) Lager
(40) Lager
(41) Lager
(42) Lager
(43) Lager
(44) Kegelrad
(45) Kegelrad
(46) Abtriebsachse
(46') Abtriebsachse
(46") Abtriebsachse
(46''') Abtriebsachse
(47) Ellipse
(48) Rückversatz
(49) Kugel- bzw. Kardangelenk

**Patentansprüche**

1. Getriebekopf für Manipulatoren, bestehend aus drei hintereinander angeordneten und um zueinander schräge Achsen (5, 6) aneinandergelagerten Kopfteilen (1, 2, 3) mit drei konzentrisch zueinander angeordneten Antriebswellen (13, 18, 26), von denen Getriebezüge längs der schrägen Achsen (5, 6) bis zum jeweils anzutreibenden Kopfteil (2, 3) geführt sind, die abtreibsseitig hochuntersetzende Untersetzungsgetriebe (17, 25, 27) aufweisen, wobei die schrägen Achsen (5, 6) in der Streckstellung des Getriebekopfes (1, 2, 3) einen in entgegengesetzter Richtung sich öffnenden spitzen Winkel mit der Längsachse (4) des Getriebekopfes (1, 2, 3) bilden, dadurch gekennzeichnet, daß im vorderen Kopfteil (3) eine zusätzliche Antriebseinheit, bestehend aus einer treibenden Welle (35), einem im vorderen Kopfteil (3) abgestützten Untersetzungsgetriebe (36) und einer davon angetriebenen, drehbar gelagerten Flanschplatte (38) angeordnet ist, und daß der zum mittleren (2) und vorderen Kopfteil (3) führende Getriebezug aus einem sie unmittelbar verbindenden Kegelradpaar (44, 45) besteht, durch welche der zum Antrieb der Flanschplatte (38) vorgesehene Getriebezug (21, 22, 23, 24, 33, 34, 35) geführt ist.

2. Getriebekopf nach Anspruch (1), dadurch gekennzeichnet, daß zwei der drei Kopfteile (1, 2, 3) vorzugsweise der mittlere (2) und vordere Kopfteil (3), mit einer der drei Antriebswellen (13, 18, 26) gekoppelt sind.

3. Getriebekopf nach Anspruch (2), dadurch gekennzeichnet, daß die Kopplung der Kopfteile (2, 3) über die an ihnen gelagerten bzw. abgestützten Untersetzungsgetriebe (17, 25) erfolgt, die mit den beiden Hohlwellen (16, 32) verbunden sind.

4. Getriebekopf nach Anspruch (1) oder folgenden, dadurch gekennzeichnet, daß die beiden Hohlwellen (16, 32) im mittleren Kopfteil (2) gelagert und über hochuntersetzende Untersetzungsgetriebe (17, 25) am hinteren bzw. am mittleren Kopfteil (1, 2) abgestützt sind.

5. Getriebekopf nach Anspruch (1) oder einem der folgenden, dadurch gekennzeichnet, daß zur Vermeidung rechnerischer Zweideutigkeiten die Achse (46") der treibenden Welle (35) schräg zur Antriebsachse (4) angeordnet ist.

6. Getriebekopf nach Anspruch (1) oder einem der folgenden, dadurch gekennzeichnet, daß zur Vermeidung rechnerischer Zweideutigkeiten die spitzen Winkel (α1, α2) der beiden schrägen Achsen am mittleren Kopfteil (2) ungleich groß sind.

7. Getriebekopf nach Anspruch (6), dadurch gekennzeichnet, daß bei schräger Anordnung der treibenden Welle (35) deren Achse (46") durch den Schnittpunkt (9') der beiden schrägen Achsen (5, 6) am mittleren Kopfteil (2) verläuft.

8. Getriebekopf nach Anspruch (1) oder einem der folgenden, dadurch gekennzeichnet, daß zur Vermeidung rechnerischer Zweideutigkeiten mindestens eine der beiden schrägen Achsen (5, 6) am mittleren Kopfteil (2) in einer zur Zeichenblattebene schrägen Ebene angeordnet ist.

9. Getriebekopf nach Anspruch (8), dadurch gekennzeichnet, daß bei einer aus der Zeichenblattebene herausgestellten Lage der beiden schrägen Achsen (5, 6) am mittleren Kopfteil (2) deren Schnittpunkt (9') in der Zeichenblattebene liegt.

10. Getriebekopf nach Anspruch (1) oder einem der folgenden, dadurch gekennzeichnet, daß der Schnittpunkt (9') der schrägen Achsen (5, 6) mit der Antriebsachse (4) und der Abtriebsachse (46', 46") als Mittelpunkt eines die Achsen (4, 46', 46") verbindenden Kugel- oder Kardangelenkes (49) vorgesehen ist.

**Claims**

1. Manipulator gear head, comprising three head sections (1, 2, 3) arranged one behind the other and mounted one on the other about axes (5, 6) inclined with respect to each other, with three drive shafts (13, 18, 26) arranged concentrically with respect to each other, from which gear trains are guided along the inclined axes (5, 6) to the respective head section (2, 3) to be driven, which comprise stepdown gears (17, 25, 27) having a high stepdown ratio at the output side, where in the elongated position of the gear head (1, 2, 3), the inclined axes (5, 6) form an acute angle opening in the opposite direction with the longitudinal axis (4) of the gear head (1, 2, 3), characterised in that located in the front head section (3) is an additional drive unit, comprising a driving shaft (35), stepdown gearing (36) supported in the front head section (3) and a flange plate (38) driven thereby and mounted in a rotary manner and that the gear train leading to the central head section (2) and front head section (3) comprises hollow shafts (16, 32) with a pair of bevel gears (44, 45) connecting them directly, through which the gear train (21, 22, 23, 24, 33, 34, 35) provided for driving the flange plate (38) is guided.

2. Gear head according to Claim 1, characterised in that two of the three head sections (1, 2, 3), preferably the central section (2) and front section (3), are connected to one of the three drive shafts (13, 18, 26).

3. Gear head according to Claim 2, characterised in that the connection of the head sections (2, 3) takes place by way of the stepdown gearing (17, 25) mounted or supported thereon, which stepdown gearing is connected to the two hollow shafts (16, 32).

4. Gear head according to Claim 1 or the following, characterised in that the two hollow shafts (16, 32) are mounted in the central head section (2) and supported on the rear or on the central head section (1, 2) by way of stepdown gearings (17, 25) having a high stepdown ratio.

5. Gear head according to Claim 1 or one of the following, characterised in that in order to avoid computer ambiguities, the axis (46") of the driving shaft (35) is arranged to be inclined with respect to the drive shaft (4).

6. Gear head according to Claim 1 or one of the following, characterised in that in order to avoid computer ambiguities, the acute angles ($\alpha$1, $\alpha$2) of the two inclined axes on the central head section (2) are not of the same size.

7. Gear head according to Claim 6, characterised in that with an inclined arrangement of the driving shaft (35), its axis (46") extends through the intersection (9') of the two inclined axes (5, 6) on the central head section (2).

8. Gear head according to Claim 1 or one of the following, characterised in that in order to avoid computer ambiguities, at least one of the two inclined axes (5, 6) on the central head section (2) is arranged in a plane inclined with respect to the plane of the drawing.

9. Gear head according to Claim 8, characterised in that in a position of the two inclined axes (5, 6) on the central head section (2) tilted with respect to the plane of the drawing, their intersection (9') lies in the plane of the drawing.

10. Gear head according to Claim 1 or one of the following, characterised in that the intersection (9') of the inclined axes (5, 6) with the drive axis (4) and the output axis (46', 46") is provided as the central point of a ball and socket joint or a universal joint (49) connecting the axes (4, 46', 46").

**Revendications**

1. Tête à engrenages pour manipulateurs, constituée par trois parties (1, 2, 3), qui sont disposées les unes derrière les autres, sont tourillonnées les unes sur les autres autour d'axes (5, 6) inclinés l'un par rapport à l'autre et comportent trois arbres d'entraînement (13, 18, 26), disposés concentriquement entre eux, et dont les trains d'engrenages sont guidés le long des axes obliques (5, 6) jusqu'à la partie (2, 3) de la tête, devant être respectivement entraînée, et qui comportent des mécanismes de démultiplication (17, 25, 27) qui réalisent une forte démultiplication sur le côté mené, et dans laquelle, lorsque la tête à engrenages (1, 2, 3) est dans la position étendue, les axes obliques (5, 6) font des angles aigus, s'ouvrant dans des directions opposées, par rapport à l'axe longitudinal (4) de la tête à engrenages (1, 2, 3), caractérisée par le fait que dans la partie avant (3) de la tête il est prévu une unité supplémentaire d'entraînement, constituée par un arbre menant (35), un mécanisme de démultiplication (36) prenant appui dans la partie avant (3) de la tête, et une plaque à bride (38), montée rotative et entraînée par le mécanisme de démultiplication, et que le train d'engrenages, qui aboutit à la partie médiane (2) et à la partie avant (3) de la tête, est constitué par des arbres creux (16, 32) comportant un couple de pignons coniques (44, 45), qui relient directement les arbres creux et à l'aide desquels le train d'engrenages (21, 22, 23, 24, 33, 34, 35) prévu pour l'entraînement de la plaque à bride (38) est guidé.

2. Tête à engrenages suivant la revendication 1, caractérisée par le fait que deux des trois parties (1, 2, 3) de la tête, de préférence la partie médiane (2) de la tête et la partie avant (3) de la tête, sont accouplées à l'un des trois arbres d'entraînement (13, 18, 26).

3. Tête à engrenages suivant la revendication 2, caractérisée par le fait que l'accouplement des parties (2, 3) de la tête s'effectue par l'intermédiaire des mécanismes de démultiplication (17, 25), qui sont tourillonnés ou prennent appui sur ces parties et sont reliés aux deux arbres creux (16, 32).

4. Tête à engrenages suivant la revendication 1 ou les suivantes, caractérisée par le fait que les deux arbres creux (16, 32) sont tourillonnés dans la partie médiane (2) de la tête et sont soutenus, par l'intermédiaire de mécanismes de démultiplication (17, 25) réalisant une forte démultiplication, sur la partie arrière ou sur la partie médiane (1, 2) de la tête.

5. Tête à engrenages suivant la revendication 1 ou l'une des suivantes, caractérisée par le fait que, pour éviter des ambiguïtés de calcul, l'axe (46") de l'arbre menant (35) est disposé obliquement par rapport à l'axe d'entraînement (4).

6. Tête à engrenages suivant la revendication 1 ou l'une des suivantes, caractérisée par le fait que, pour éviter des ambiguïtés de calcul, les angles aigus ($\alpha_1$, $\alpha_2$) des deux axes obliques dans la partie médiane (2) de la tête possèdent des Valeurs différentes.

7. Tête à engrenages suivant la revendication 6, caractérisée par le fait que, dans le cas d'une disposition oblique de l'arbre menant (25), un axe (46") passe par le point d'intersection (9') des deux axes obliques (5, 6) dans la partie médiane (2) de la tête.

8. Tête à engrenages suivant la revendication 1 ou l'une des suivantes, caractérisée par le fait que pour éviter des ambiguïtés de calcul, au moins l'un des deux axes obliques (5, 6) est disposé, sur la partie médiane (2) de la tête, dans un plan oblique par rapport au plan du dessin.

9. Tête à engrenages suivant la revendication 8, caractérisée par le fait que dans le cas où les deux axes obliques (5, 6) situés sur la partie médiane (2) de la tête sont dans une position ressortie par rapport au plan du dessin, leur point d'intersection (9') est situé dans le plan du dessin.

10. Tête à engrenages suivant la revendication 1 ou l'une des suivantes, caractérisée par le fait que le point d'intersection (9') des axes obliques (5, 6) avec l'axe d'entraînement (4) et l'axe mené (46', 46") est prévu sous la forme d'un point central d'une articulation sphérique ou à la cardan (49) reliant les axes (4, 46', 46").

FIG.1

FIG.2

FIG.3

FIG. 4

FIG. 5

FIG. 6

FIG. 7

FIG. 8

FIG. 9

FIG. 10

FIG.11

EP 0 209 111 B1

FIG. 12

FIG. 13

EP 0 209 111 B1

FIG. 14